# EUROPÄISCHE PATENTSCHRIFT

(11) **EP 0 729 210 B1**
(45) Veröffentlichungstag und Bekanntmachung des Hinweises auf die Patenterteilung: **11.08.1999**
(21) Anmeldenummer: 96101294.5
(22) Anmeldetag: 30.01.1996
(51) Int. Cl.: H02H 3/247

(54) **Schaltungsanordnung**
Circuit arrangement
Montage de circuit

(30) Priorität: 24.02.1995 DE 19506525
(43) Veröffentlichungstag der Anmeldung: 28.08.1996
(73) Patentinhaber: SIEMENS AKTIENGESELLSCHAFT, 80333 München (DE)
(72) Erfinder: Glöckler, Jean, F-67160 Riedseltz (FR); Knauer, Detlev, D-76863 Herxheim (DE)

(56) Entgegenhaltungen:
- EP-A- 0 203 366
- US-A- 4 771 356
- DATABASE WPI Section EI, Week 8508 Derwent Publications Ltd., London, GB; Class X13, AN 85-048552 XP002004277 & SU-A-1 101 947 (PADALKA V S) , 7.Juli 1984

## Beschreibung

Die Erfindung betrifft eine Schaltungsanordnung mit Ausgangsklemmen, von denen eine Ausgangsklemme über eine Masseleitung an den ersten Anschluß einer induktiven Last und eine Anschlußklemme über eine Leitung an den zweiten Anschluß dieser Last und über eine Spannungsüberwachungsschaltung an eine Spannungsversorgungsleitung anschließbar ist, wobei die Spannungsüberwachungsschaltung die Versorgungsleitung unterbricht, falls der Spannungsabfall zwischen den Ausgangsklemmen eine Referenzspannung unterschreitet, und mit einer den Ausgangsklemmen parallelgeschalteten Löscheinrichtung, welche beim Abschalten der Versorgungsspannung das Auftreten hoher Spannungen zwischen den Ausgangsklemmen verhindert.

Derartige Schaltungsanordnungen sind häufig für Digitalausgabeeinheiten vorgesehen, wobei die Spannungsüberwachungsschaltung Bestandteil eines Leistungstreibers sein kann. In einer solchen Digitalausgabeeinheit kann es nun vorkommen, daß während des Ansteuerns der induktiven Last, z. B. eine induktive Last in Form eines Schutzes, die Masseverbindung zwischen dieser Last und der Anschlußklemme der Einheit unterbrochen wird, wodurch der Spannungsabfall an den Ausgangsklemmen geringer ist als die Referenzspannung der Spannungsüberwachungsschaltung. Diese schaltet daraufhin über einen steuerbaren Schalter der induktiven Last die Versorgungsspannung ab. Während eines sich anschließenden Löschvorgangs wird die Energie der induktiven Last abgebaut. Dabei fließt über eine Eingangsbeschaltung und die Löscheinrichtung ein Strom, welcher eine Eingangsspannung an der Spannungsüberwachungsschaltung verursacht. Falls diese Eingangsspannung der Referenzspannung entspricht, schließt die Spannungsüberwachungsschaltung wieder den Schalter, und die der induktiven Last aufgeschaltete Versorgungsspannung bewirkt einen Ausgangsstrom, welcher so lange durch die Last fließt, bis wegen der fehlenden Masseverbindung die Spannung an der Last wiederum zusammenbricht. Dadurch schaltet die Spannungsüberwachungsschaltung die Versorgungsspannung wieder ab und leitet einen weiteren Löschvorgang ein. Das Zu- und Abschalten der Versorgungsspannung durch die Spannungsüberwachungsschaltung verursacht störende Spannungsschwankungen (Schwingungen) an den Ausgangsklemmen, welche die induktive Last und die Digitalausgabeeinheit beschädigen können. Auch können dadurch gefährliche Anlagenzustände während des Einsatzes einer solchen Digitalausgabeeinheit in einer Anlage entstehen.

Der vorliegenden Erfindung liegt die Aufgabe zugrunde, eine Schaltungsanordnung der eingangs genannten Art anzugeben, an deren Ausgangsklemmen durch Unterbrechung der Masseleitung bewirkte Spannungsschwankungen weitgehend verhindert werden.

Diese Aufgabe wird durch die im kennzeichnenden Teil des Anspruchs 1 angegebenen Maßnahmen gelöst.

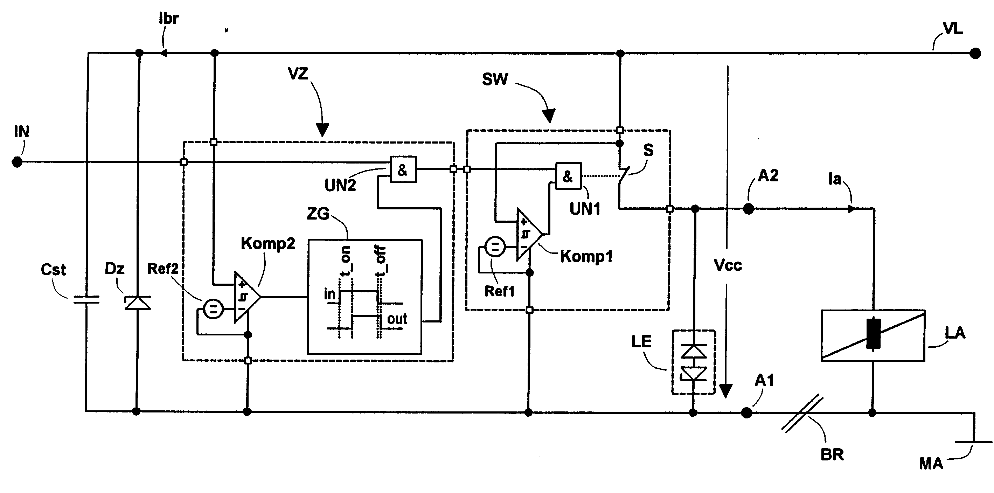

Anhand der Zeichnung, in der ein Ausführungsbeispiel der Erfindung veranschaulicht ist, werden die Erfindung, deren Ausgestaltungen sowie Vorteile näher erläutert.

Mit A1, A2 sind Ausgangsklemmen einer Schaltungsanordnung bezeichnet, von denen die Klemme A1 mit dem ersten Anschluß einer induktiven Last LA und mit einem Masseanschluß verbunden ist. An die Klemme A2 ist der zweite Anschluß dieser induktiven Last LA angeschlossen und über einen steuerbaren Schalter S einer Spannungsüberwachungsschaltung SW eine 24 V-Versorgungsleitung VL. Weitere Bestandteile der Spannungsüberwachungsschaltung SW sind ein UND-Verknüpfungsglied UN1 und ein Komparator Kompl, dessen nichtinvertierender Eingang mit der Versorgungsleitung VL und dessen invertierender Eingang mit einer Referenzspannungsquelle Ref1 verbunden ist. An die Eingänge des UND-Verknüpfungsgliedes UN1 sind die Ausgangsleitungen des Komparators Kompl und einer Verzögerungsschaltung VZ angeschlossen. Der Ausgang des UND-Verknüpfungsgliedes UN1 ist über eine Steuerleitung mit dem Schalter S verbunden.

In einer bekannten Schaltungsanordnung ist ein Eingang des UND-Verknüpfungsgliedes UN1 direkt auf einen Binärsignaleingang IN der Schaltungsanordnung geführt. Im störungsfreien Betrieb, d. h., die Masseverbindung ist nicht unterbrochen, schließt der Schalter S während eines aktiven Binärsignals am Eingang IN, und ein Ausgangsstrom Ia fließt von der Versorgungsleitung VL über die induktive Last LA zur Masse MA. Falls die Masseverbindung unterbrochen ist (in der Zeichnung durch ein Bezugszeichen BR dargestellt), sinkt die Spannung Vcc am nichtinvertierenden Eingang des Komparators Kompl, welcher über das UND-Verknüpfungsglied UN1 den Schalter S öffnet, falls diese Spannung der Referenzspannung der Referenzspannungsquelle Refl an seinem invertierenden Eingang entspricht. Wegen der unterbrochenen Masseverbindung kann der Ausgangsstrom Ia nicht über eine an sich bekannte Löscheinrichtung LE fließen. Ein Strom Ibr fließt von der Versorgungsleitung VL über eine aus einem Kondensator Cst und einer Zenerdiode Dz bestehende Eingangsbeschaltung, wobei die Zenerdiode Dz zur Stabilisierung der Versorgungsspannung und der Kondensator Cst zum Ausfiltern der Wechselspannungsanteile vorgesehen sind. Durch den Strom Ibr baut sich über der Eingangsbeschaltung eine Spannung auf, welche größer als die Referenzspannung am Komparator Kompl ist, wodurch dieser den Schalter S wieder schließt. Der Ausgangsstrom Ia fließt nun wiederum kurzzeitig durch die induktive Last LA, die Spannung Vcc bricht wegen der unterbrochenen Masseverbindung wieder zusammen und der Komparator Kompl Öffnet erneut den Schalter S. Die durch das mehrfache Öffnen und Schließen des Schalters S bewirkten Spannungsschwankungen (Schwingungen) an den Ausgangsklemmen A1, A2 können die induktive Last und Schaltungsteile beschädigen.

Um diese Spannungsschwankungen weitgehend zu vermeiden, ist der Spannungsüberwachungsschaltung SW die Verzögerungsschaltung VZ vorgeschaltet. Diese umfaßt im wesentlichen einen Komparator Komp2 mit einer Referenzspannungsquelle Ref2, ein Zeitglied ZG und ein UND-Verknüpfungsglied UN2, dessen Ausgang mit einem Eingang des UND-Verknüpfungsgliedes UN1 verbunden ist. Der nichtinvertierende Eingang des Komparators Komp2 ist an die Versorgungsleitung VL angeschlossen, der invertierende Eingang an die Referenzspannungsquelle Ref2, welche eine Referenzspannung liefert, die größer als die Referenzspannung der Referenzspannungsquelle Refl des Komparators Kompl ist. In einem praktischen Ausführungsbeispiel der Erfindung beträgt bei einer 24 V-Versorgungsspannung die Referenzspannung der Referenzspannungsquelle Refl 9 V und die der Referenzspannungsquelle Ref2 15 V.
Im folgenden wird davon ausgegangen, daß das Eingangssignal am Eingang IN weiterhin aktiv, die Masseverbindung unterbrochen und der Schalter S der Spannungsüberwachungsschaltung SW offen ist. Wie beschrieben, fällt an der Eingangsbeschaltung Cst, Dz eine durch den Strom Ibr verursachte Spannung ab. Falls diese Spannung größer als die eingestellte Referenzspannung am Komparator Komp2 ist, schaltet dieser sein Ausgangssignal aktiv, welches das Zeitglied ZG aufgrund eines voreingestellten Zeitintervalls t_on verzögert dem UND-Verknüpfungsglied UN2 zuleitet, dessen Ausgangssignal zusammen mit dem Ausgangssignal des Komparators Komp2 über das UND-Verknüpfungsglied UN1 den Schalter S ansteuert. Das Zeitintervall t_on kann so voreingestellt werden, daß der Schalter S so lange geöffnet bleibt, bis die induktive Last LA vollständig "gelöscht" und die Spannung Vcc vollständig zusammengebrochen ist.
Man kann das Intervall auch so wählen, daß die induktive Last LA in mehreren Schritten gelöscht wird und bis zur vollständigen Löschung mehrere Teillöschvorgänge vorgesehen sind. Vorteilhaft ist, daß nach einem ordnungsgemäßen Aufschalten der Versorgungsspannung und Beseitigung der Unterbrechung der Masseverbindung der Ausgang der Schaltungsanordnung schneller betriebsbereit ist. Nach dem Ende eines Teillöschvorgangs (t_off ist abgelaufen) baut sich die Spannung Vcc wieder auf, und es kommt zu einem erneuten Ansteuern des Ausgangs, jedoch nur für eine kurze Zeitspanne (t_off < t_on). Der induktiven Last wird somit lediglich eine begrenzte Energie zugeführt, die kleiner ist als die durch den Löschvorgang entnommene. Das bedeutet, die während eines Teillöschvorgangs der induktiven Last LA entnommene Energie muß größer sein als die beim erneuten Ansteuern wieder zugeführte Energie. Wie beschrieben, bricht während eines Ansteuervorgangs die Spannung Vcc wieder zusammen, die Verzögerungsschaltung VZ öffnet über die Spannungsüberwachungsschaltung SW den Schalter S und schaltet den Ausgang ab. Die Teillöschvorgänge werden so lange wiederholt, bis die induktive Last vollständig gelöscht ist.

## Patentansprüche

1. Schaltungsanordnung mit Ausgangsklemmen (A1, A2), von denen eine Ausgangsklemme (A1) über eine Masseleitung (MA) an den ersten Anschluß einer induktiven Last (LA) und eine Anschlußklemme (A2) über eine Leitung an den zweiten Anschluß dieser Last (LA) und über eine Spannungsüberwachungsschaltung (SW) an eine Spannungsversorgungsleitung (VL) anschließbar ist, wobei die Spannungsüberwachungsschaltung (SW) die Versorgungsleitung (VL) unterbricht, falls der Spannungsabfall zwischen den Ausgangsklemmen (A1, A2) eine Referenzspannung unterschreitet, und mit einer den Ausgangsklemmen (A1, A2) parallelgeschalteten Löscheinrichtung (LE), welche beim Abschalten der Versorgungsspannung das Auftreten hoher Spannungen zwischen den Ausgangsklemmen (A1, A2) verhindert,
**dadurch gekennzeichnet**,
daß eine der Spannungsüberwachungsschaltung (SW) vorgeschaltete Verzögerungsschaltung (VZ) vorgesehen ist, welche für den Fall einer unterbrochenen Masseleitung (MA) für ein vorgebbares Zeitintervall auf die Spannungsüberwachungsschaltung (SW) derart einwirkt, daß die Versorgungsleitung (VL) unterbrochen bleibt.

2. Schaltungsanordnung nach Anspruch 1, **dadurch gekennzeichnet**, daß die Verzögerungsschaltung (VZ) einen mit einer Referenzspannungsquelle (Ref2) versehenen Komparator (Komp2) und ein dem Komparator (Komp2) nachgeschaltetes Zeitglied (ZG) umfaßt, wobei die Referenzspannung größer ist als die Referenzspannung der Spannungsüberwachungsschaltung (SW) .

3. Digitalausgabeeinheit mit einer Schaltungsanordnung nach Anspruch 1 oder 2.

## Claims

1. Circuit arrangement having output terminals (A1, A2), of which on one output terminal (A1) can be connected by way of an earthing line (MA) to the first connection of an inductive load (LA) and one output terminal (A2) can be connected by way of a line to the second connection of this load (LA) and by way of a voltage monitoring circuit (SW) to a voltage supply line (VL), with the voltage monitoring circuit (SW) interrupting the supply line (VL) if the voltage drop between the output terminals (Al, A2) falls below a reference voltage, and having a quenching device (LE) which is connected in parallel with the output terminals (Al, A2) and which, when the supply voltage is switched off, prevents the occurrence of high voltages between the output terminals (Al, A2), characterised in that there is provided a time-delay circuit (VZ), which is connected upstream of the voltage monitoring circuit (SW) and, for the case of an interrupted earth line (MA), acts for a predeterminable time interval on the voltage monitoring circuit (SW), in such a way that the supply line (VL) remains interrupted.

2. Circuit arrangement according to claim 1, characterised in that the time-delay circuit (VZ) comprises a comparator (Komp2) provided with a reference voltage source (Ref2) and a timing element (ZG) connected downstream of the comparator (Komp2), with the reference voltage being greater than the reference voltage of the voltage monitoring circuit (SW).

3. Digital output unit having a circuit arrangement according to claim 1 or 2.

## Revendications

1. Montage comportant des bornes (A1, A2), de sortie, dont une borne (A1) de sortie peut être reliée à la première borne d'une charge (LA) inductive par l'intermédiaire d'une ligne (MA) de masse et dont une borne (A2) de raccordement peut être raccordée, par l'intermédiaire d'une ligne, à la deuxième borne de cette charge (LA) et, par l'intermédiaire d'un circuit (SW) de surveillance de tension, à une ligne (VL) d'alimentation en tension, le circuit (SW) de surveillance de tension interrompant la ligne (VL) d'alimentation dans le cas où la baisse de tension entre les bornes (A1, A2) de sortie est inférieure à une tension de référence, et comportant un dispositif (LE) pour effacer qui est monté en parallèle avec les bornes (A1, A2) de sortie et qui, lors de la déconnexion de la tension d'alimentation, empêche l'apparition de hautes tensions entre les bornes (A1, A2) de sortie, caractérisé en ce qu'il est prévu un circuit (VZ) de temporisation qui est monté en amont du circuit (SW) de surveillance de tension et qui, dans le cas d'une ligne (MA) de masse interrompue, agit, pour un intervalle de temps pouvant être prescrit, sur le circuit (SW) de surveillance de tension de telle manière que la ligne (VL) d'alimentation reste interrompue.

2. Montage suivant la revendication 1, caractérisé en ce que le circuit (VZ) de temporisation comprend un comparateur (Komp2) muni d'une source (Ref2) de tension de référence et un élément (ZG) temporisateur monté en aval du comparateur (Komp2), la tension de référence étant plus grande que la tension de référence de la source (SW) de surveillance de tension.

3. Unité de sortie numérique comportant un montage suivant la revendication 1 ou 2.
